# EUROPEAN PATENT APPLICATION

(11) **EP 4 542 707 A1**
(43) Date of publication of application: **23.04.2025**
(21) Application number: 23822626.0
(22) Date of filing: 29.01.2023
(51) Int. Cl.: H01M 10/056, H01M 10/0565

(54) **LITHIUM-SALT-FREE COMPOSITE SOLID ELECTROLYTE MEMBRANE AND PREPARATION METHOD THEREFOR**

(30) Priority: 14.06.2022 CN 202210669774
(71) Applicant: Huaneng Clean Energy Research Institute, Beijing 102209 (CN)
(72) Inventor: SUN, Zhouting, Beijing 102209 (CN); LIU, Mingyi, Beijing 102209 (CN); XU, Ruochen, Beijing 102209 (CN); CAO, Xi, Beijing 102209 (CN); CAO, Chuanzhao, Beijing 102209 (CN); LIU, Dawei, Beijing 102209 (CN); PEI, Jie, Beijing 102209 (CN); ZHU, Yong, Beijing 102209 (CN); LEI, Haodong, Beijing 102209 (CN); ZHANG, Jiangtao, Beijing 102209 (CN); WANG, Jiayun, Beijing 102209 (CN); WANG, Jianxing, Beijing 102209 (CN); LI, Hao, Beijing 102209 (CN)
(74) Representative: Albert Catala, Andrea
(86) International application number: PCT/CN2023/073633
(87) International publication number: WO 2023/241054

(57) **Abstract**

A lithium salt-free composite solid electrolyte membrane and a preparation method thereof are provided. The composition of the lithium salt-free composite solid electrolyte membrane includes: micro-nanoscale garnet-type solid electrolyte and polymer; where a mass ratio of the micro-nanoscale garnet-type solid electrolyte to the polymer is (60-100) : (5-40); a particle size of the micro-nanoscale garnet-type solid electrolyte is 100 nm - 2 µm. The disclosure also provides a preparation method for the lithium salt-free composite solid electrolyte membrane. The lithium salt-free composite solid electrolyte membrane prepared by the disclosure has controllable morphology and thickness, and does not need to add lithium salt and be equipped with anhydrous and inert environment atmosphere, so that the production cost can be significantly reduced, and large-scale production is easy.

## Description

### TECHNICAL FIELD

The disclosure relates to the technical field of energy storage, in particular to a lithium salt-free composite solid electrolyte membrane and a preparation method thereof.

### BACKGROUND

Lithium-ion batteries are widely used in energy storage systems, new energy vehicles and electronic consumer products at present. The demand for its security is also increasing with the expansion of application scenarios day by day. In the traditional liquid electrolyte, due to mechanical abuse or electronic abuse, the battery is short-circuited and releases heat to cause heat abuse, and finally the flammable electrolyte burns or even explodes. The use of solid electrolyte can avoid this process, and the safety of the battery is greatly improved.

Solid electrolyte can be divided into polymer electrolyte, inorganic electrolyte and organic-inorganic composite electrolyte according to composition. Inorganic electrolyte has high ionic conductivity, strong thermal stability and good mechanical properties at room temperature. However, due to high mechanical strength, it is not easy to process, and the interface contact between inorganic electrolyte and electrode is poor, resulting in high interfacial impedance and weak current chemical properties. The ionic conductivity of polymer electrolyte is low, but it has strong ductility, easy film forming and good contact with electrode interface, and is easier to be molded and mass produced. Because the polymer itself usually does not have lithium ion conductivity, it usually needs to be compounded with lithium salt, and lithium ion (Li⁺) is transferred depending on the segment movement of polymer amorphous region.

In order to combine the advantages of polymer electrolyte and inorganic electrolyte, they are usually combined to form organic-inorganic composite electrolyte. At present, inorganic solid electrolyte can achieve high ionic conductivity at room temperature, usually reaching 10⁻³ S/cm, which is close to liquid electrolyte. Garnet-type solid electrolyte (LLZO) and sulfide solid electrolyte are the two most common inorganic ceramic electrolytes. Garnet-type solid electrolyte is a typical inorganic ceramic solid electrolyte, which is relatively stable to water and oxygen in the air and is beneficial to preparation and operation. In addition, LLZO is electrochemically stable with conventional solvents and can be easily compounded with polymers to form composite electrolytes. Because the polymer itself does not contain lithium ions, lithium salts such as lithium bis (trifluoromethyl) sulfonimide (LiTFSI) are usually added to the matrix additionally in current research, but the price of lithium salts is high, which brings additional costs. In addition, because lithium salt reacts with water, the compounding process usually needs to be performed in an inert gas atmosphere. Therefore, the addition of lithium salt will increase the preparation cost and difficulty of composite electrolyte.

### SUMMARY

The purpose of the disclosure is to provide a lithium salt-free composite solid electrolyte membrane and a preparation method thereof, which at least solve the problems of high preparation cost and complex preparation process of the existing solid electrolyte membrane to some extent.

The technical scheme adopted in this disclosure is as follows:
On the one hand, the embodiment of the disclosure provides a lithium salt-free composite solid electrolyte membrane, composition of the lithium salt-free composite solid electrolyte membrane includes: micro-nanoscale garnet-type solid electrolyte and polymer; where a mass ratio of the micro-nanoscale garnet-type solid electrolyte to the polymer is (60-100) : (5-40); a particle size of the micro-nanoscale garnet-type solid electrolyte is 100 nm - 2 µm.

The lithium salt-free composite solid electrolyte membrane in the embodiment of the disclosure is composed of garnet-type solid electrolyte and polymer, and no additional lithium salt is needed, so that the demand for inert atmosphere is reduced, and the preparation cost is reduced. Moreover, the particle size of garnet-type solid electrolyte in the embodiment of the disclosure is small, which is beneficial to fully mixing with polymer, so as to ensure the mechanical properties such as uniformity and toughness of lithium salt-free composite solid electrolyte membrane.

In some embodiments, a mass ratio of the micro-nanoscale garnet-type solid electrolyte to the polymer is preferably (70-90): (10-30); a particle size of the micro-nanoscale garnet-type solid electrolyte is preferably 100 nm-1 µm.

In some embodiments, the polymer is selected from polyethylene oxide, polyvinylidene fluoride or polyvinylidene fluoride-hexafluoropropylene, preferably polyethylene oxide.

On the other hand, the embodiment of the disclosure also provides a preparation method for a lithium salt-free composite solid electrolyte membrane, which includes:
step 1, performing wet ball milling on garnet-type solid electrolyte, and drying by vacuum rotary evaporation, to obtain micro-nanoscale garnet-type solid electrolyte;
step 2, mixing the micro-nanoscale garnet-type solid electrolyte and polymer in a solvent to obtain glue solution;
step 3, coating the glue solution and drying to obtain the lithium salt-free composite solid electrolyte membrane.

According to the preparation method for lithium salt-free composite solid electrolyte membrane provided by the embodiment of the disclosure, garnet-type solid electrolyte is performed wet ball milling, and drying is performed by vacuum rotary evaporation. Compared with ordinary vacuum oven static drying, vacuum rotary evaporation drying can keep small-sized particles after performing wet ball milling to the greatest extent, and the size is uniform, which is beneficial to the subsequent full mixing with polymers. Moreover, the preparation method is simple in process, easy to operate and beneficial to large-scale manufacturing.

In some embodiments, in step 2, a process for mixing the micro-nanoscale garnet-type solid electrolyte and the polymer is performed in an air atmosphere, and a mixing temperature is 25-80 °C, and a mixing time is 1-10 h.

In some embodiments, in step 1, a rotational speed of the wet ball milling is 100-500 r/min, and a ball milling time is 1-20 h. Isopropanol is used as solvent in wet ball milling. The temperature of vacuum rotary evaporation is 40-60 °C. The rotating speed is 10 - 300 r/min.

In some embodiments, in step 2, the solvent is selected from acetonitrile and dimethyl sulfoxide or mixture thereof.

In some embodiments, in step 1, a method for preparing the garnet-type solid electrolyte includes: mixing lithium source, lanthanum source, zirconium source and oxygen source in proportion and pressing into tablet; then calcining in a pure oxygen atmosphere of 900-1300 °C to prepare the garnet-type solid electrolyte.

Further, the embodiment of the disclosure also provides an application of the lithium salt-free composite solid-state electrolyte membrane in the all-solid-state battery, where the lithium salt-free composite solid-state electrolyte membrane is used as the electrolyte membrane in the all-solid-state battery; where the thickness of the lithium salt-free composite solid electrolyte membrane is 10-400 µm.

The disclosure has the advantages and beneficial effects that:
Firstly, the lithium salt-free composite solid electrolyte membrane in the embodiment of this disclosure is composed of micro-nanoscale garnet-type solid electrolyte and polymer without adding lithium salt. Among them, micro-nanoscale garnet-type solid electrolyte provides high ionic conductivity, which ensures the ionic conductivity of lithium salt-free composite solid electrolyte membrane. The introduction of polymer helps to improve the ductility and processability of lithium salt-free composite solid electrolyte membrane, and does not need to add additional lithium salt, which reduces the production cost and preparation difficulty of solid electrolyte membrane.

Secondly, the preparation method for the lithium salt-free composite solid electrolyte membrane in the embodiment of the disclosure is simple in process, where the mixing process of the micro-nanoscale garnet-type solid electrolyte and the polymer can be completely carried out in air, and the anhydrous and inert atmosphere required to ensure the quality of lithium salt is not needed, so that the usability of the design in actual production is enhanced, and the method has the advantage of scale production.

Thirdly, according to the embodiment of the disclosure, the garnet-type solid electrolyte particles obtained by wet ball milling are small in size, and they are dried by vacuum rotary evaporation. Compared with ordinary vacuum static drying, the garnet-type solid electrolyte particles obtained by wet ball milling can maintain small-size morphology and uniform size by vacuum rotary evaporation, which is beneficial to their full mixing with polymers to ensure the integrity and flexibility of lithium salt-free composite solid electrolyte membrane.

### BRIEF DESCRIPTION OF THE DRAWINGS

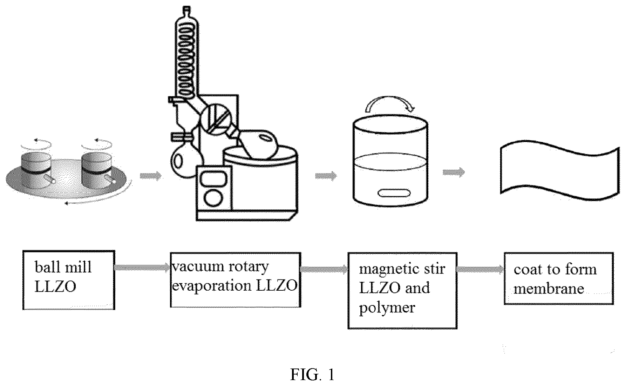

FIG. 1 is a schematic diagram of the preparation process of lithium salt-free composite solid electrolyte membrane according to embodiments 1-3 of the disclosure.
FIG. 2 is an optical photograph of the lithium salt-free composite solid electrolyte membrane according to embodiment 1 of the disclosure;
FIG. 3 is an SEM diagram of the lithium salt-free composite solid electrolyte membrane according to embodiment 1 of the disclosure; and
FIG. 4 is an EIS spectrum of the lithium salt-free composite solid electrolyte membrane according to embodiment 1 of the disclosure.

### DETAILED DESCRIPTION OF THE EMBODIMENTS

In the following, the embodiments of the disclosure will be described in detail, which are exemplary and are intended to explain the disclosure, and should not be construed as limitations of the disclosure.

On the one hand, the embodiment of the disclosure provides a lithium salt-free composite solid electrolyte membrane, composition of the lithium salt-free composite solid electrolyte membrane includes: micro-nanoscale garnet-type solid electrolyte and polymer; where a mass ratio of the micro-nanoscale garnet-type solid electrolyte to the polymer is (60-100) : (5-40); a particle size of the micro-nanoscale garnet-type solid electrolyte is 100 nm - 2 µm.

The lithium salt-free composite solid electrolyte membrane in the embodiment of the disclosure is composed of garnet-type solid electrolyte and polymer, and no additional lithium salt is needed, so that the demand for inert atmosphere is reduced, and the preparation cost is reduced. Moreover, the particle size of garnet-type solid electrolyte in the embodiment of the disclosure is small, which is beneficial to fully mixing with polymer, so as to ensure the mechanical properties such as uniformity and toughness of lithium salt-free composite solid electrolyte membrane.

In some embodiments, a mass ratio of the micro-nanoscale garnet-type solid electrolyte to the polymer is preferably (70-90): (10-30); a particle size of the micro-nanoscale garnet-type solid electrolyte is preferably 100 nm-1 µm. By adjusting the ratio of micro-nanoscale garnet-type solid electrolyte to polymer to a suitable range, the composite solid electrolyte membrane has a certain toughness on the premise of ensuring high conductivity.

In some embodiments, the polymer is selected from polyethylene oxide, polyvinylidene fluoride or polyvinylidene fluoride-hexafluoropropylene, preferably polyethylene oxide.

On the other hand, the embodiment of the disclosure also provides a preparation method for a lithium salt-free composite solid electrolyte membrane, which includes:
step 1, wet ball milling is performed on garnet-type solid electrolyte, and drying is performed by vacuum rotary evaporation, to obtain micro-nanoscale garnet-type solid electrolyte;
step 2, the micro-nanoscale garnet-type solid electrolyte and polymer are mixed in a solvent to obtain glue solution;
step 3, the glue solution is coated, and drying is performed to obtain the lithium salt-free composite solid electrolyte membrane.

According to the preparation method for lithium salt-free composite solid electrolyte membrane provided by the embodiment of the disclosure, garnet-type solid electrolyte is performed wet ball milling, and drying is performed by vacuum rotary evaporation. Compared with ordinary vacuum oven static drying, vacuum rotary evaporation drying can keep small-sized particles after performing wet ball milling to the greatest extent, and the size is uniform, which is beneficial to the subsequent full mixing with polymers. Moreover, the preparation method is simple in process, easy to operate.

In some embodiments, in step 2, a process for mixing the micro-nanoscale garnet-type solid electrolyte and the polymer is performed in an air atmosphere. There is no need to control the anhydrous and inert atmosphere, and it has the advantage of large-scale production; and a mixing temperature is 25-80 °C, and a mixing time is 1-10 h.

In some embodiments, in step 1, a rotational speed of the wet ball milling is 100-500 r/min, and a ball milling time is 1-10 h. Isopropanol is used as solvent in wet ball milling. The temperature of vacuum rotary evaporation is 40-60 °C. The rotating speed is 10 - 300 r/min.

In some embodiments, in step 2, the solvent is selected from acetonitrile and dimethyl sulfoxide or mixture thereof.

In some embodiments, in step 1, a method for preparing the garnet-type solid electrolyte includes: lithium source, lanthanum source, zirconium source and oxygen source are mixed in proportion and pressing into tablet; then calcining is performed in a pure oxygen atmosphere of 900-1300 °C to prepare the garnet-type solid electrolyte.

Further, the embodiment of the disclosure also provides an application of the lithium salt-free composite solid-state electrolyte membrane in the all-solid-state battery, where the lithium salt-free composite solid-state electrolyte membrane is used as the electrolyte membrane in the all-solid-state battery; where the thickness of the lithium salt-free composite solid electrolyte membrane is 10-400 µm.

The lithium salt-free composite solid electrolyte membrane and the preparation method thereof are further described in detail through specific embodiments.

### Embodiment 1

A preparation method for a lithium salt-free composite solid electrolyte membrane, which includes:
S1, after wet ball milling is performed on the garnet-type solid electrolyte (LLZO), the ball milled garnet-type solid electrolyte is dried by vacuum rotary evaporation at 50 °C at a speed of 40 r/min to obtain micro-nanoscale garnet-type solid electrolyte with a particle size of about 1 µm;
S2, polyethylene oxide (PEO) is dissolved in acetonitrile in advance, then the micro-nanoscale garnet-type solid electrolyte obtained in S1 is added into the mixed solution of polyethylene oxide and acetonitrile (where, the mass ratio of micro-nanoscale garnet-type solid electrolyte to polyethylene oxide is 75:25), and then magnetic stirring is performed at 25 °C for 3h, the rotating speed is 200 r/min to obtain glue solution;
S3, the glue solution is coated on the surface of the glass plate by using a scraper, where the thickness of the scraping coating is 300µm, and after the scraping coating is completed, the glass plate is put into a vacuum drying oven, and drying is performed at 60 °C for 12h to obtain the lithium salt-free composite solid electrolyte membrane.

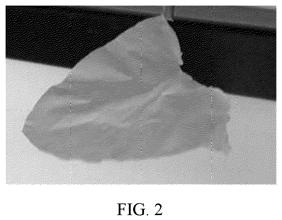

FIG. 2 is an optical photograph of the lithium salt-free composite solid electrolyte membrane prepared in this embodiment. The results show that the lithium salt-free composite solid electrolyte membrane prepared in this embodiment is complete in structure and has certain flexibility.

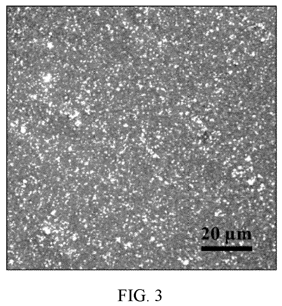

FIG. 3 is the SEM diagram of the lithium salt-free composite solid electrolyte membrane prepared in this embodiment. The results show that garnet-type solid electrolyte is uniformly dispersed in the polyethylene oxide matrix under microscopic vision.

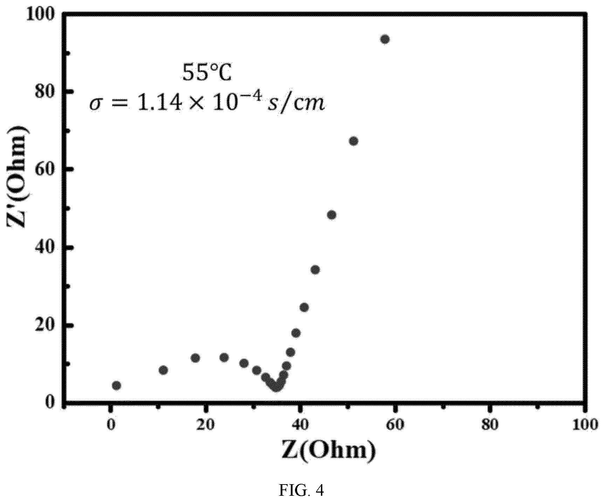

FIG. 4 is the EIS spectrum of the lithium salt-free composite solid electrolyte membrane prepared in this embodiment. As can be seen from FIG. 4, the ionic conductivity of the lithium salt-free composite solid electrolyte membrane prepared in this embodiment can reach 1.14× 10⁻⁴ S/cm, which has the possibility of practical application.

### Embodiment 2

A preparation method for a lithium salt-free composite solid electrolyte membrane, which includes:
S1, after wet ball milling is performed on the garnet-type solid electrolyte (LLZO), the ball milled garnet-type solid electrolyte is dried by vacuum rotary evaporation at 50°C at a speed of 40 r/min to obtain micro-nanoscale garnet-type solid electrolyte with a particle size of about 1 µm;
S2, polyethylene oxide (PEO) is dissolved in acetonitrile in advance, then the micro-nanoscale garnet-type solid electrolyte obtained in S1 is added into the mixed solution of polyethylene oxide and acetonitrile (where, the mass ratio of micro-nanoscale garnet-type solid electrolyte to polyethylene oxide is 70:30), and then magnetic stirring is performed at 25 °C for 3h, the rotating speed is 200 r/min to obtain glue solution;
S3, the glue solution is coated on the surface of the glass plate by using a scraper, where the thickness of the scraping coating is 300µm, and after the scraping coating is completed, the glass plate is put into a vacuum drying oven, and drying is performed at 60 °C for 12h to obtain the lithium salt-free composite solid electrolyte membrane.

### Embodiment 3

A preparation method for a lithium salt-free composite solid electrolyte membrane, which includes:
S1, after wet ball milling is performed on the garnet-type solid electrolyte (LLZO), the ball milled garnet-type solid electrolyte is dried by vacuum rotary evaporation at 50°C at a speed of 40 r/min to obtain micro-nanoscale garnet-type solid electrolyte with a particle size of about 1 µm;
S2, polyethylene oxide (PEO) is dissolved in acetonitrile in advance, then the micro-nanoscale garnet-type solid electrolyte obtained in S1 is added into the mixed solution of polyethylene oxide and acetonitrile (where, the mass ratio of micro-nanoscale garnet-type solid electrolyte to polyethylene oxide is 70:30), and then magnetic stirring is performed at 25 °C for 3h, the rotating speed is 200 r/min to obtain glue solution.
S3, the glue solution is coated on the surface of the glass plate by using a scraper, where the thickness of the scraping coating is 400µm, and after the scraping coating is completed, the glass plate is put into a vacuum drying oven, and drying is performed at 60 °C for 12h to obtain the lithium salt-free composite solid electrolyte membrane.

In this disclosure, the terms "one embodiment", "some embodiments", "example", "specific example" or "some examples" etc. mean that the specific features, structures, materials or characteristics described in connection with this embodiment or example are included in at least one embodiment or example of this disclosure. In this description, the schematic expressions of the above terms are not necessarily aimed at the same embodiment or example. Moreover, the specific features, structures, materials or characteristics described may be combined in any one or more embodiments or examples in a suitable manner. In addition, those skilled in the art can combine and unite different embodiments or examples and features of different embodiments or examples described in this description without contradicting each other.

Although the embodiments of the disclosure have been shown and described above, it can be understood that the above embodiments are exemplary and cannot be understood as limitations of the disclosure, and those ordinary skilled in the art can make changes, modifications, substitutions and variations to the above embodiments within the scope of the disclosure.

## Claims

1. A lithium salt-free composite solid electrolyte membrane, wherein composition of the lithium salt-free composite solid electrolyte membrane comprises: micro-nanoscale garnet-type solid electrolyte and polymer; wherein a mass ratio of the micro-nanoscale garnet-type solid electrolyte to the polymer is (60-100) : (5-40); a particle size of the micro-nanoscale garnet-type solid electrolyte is 100 nm - 2 µm.

2. The lithium salt-free composite solid electrolyte membrane according to claim 1, wherein a mass ratio of the micro-nanoscale garnet-type solid electrolyte to the polymer is (70-90): (10-30); a particle size of the micro-nanoscale garnet-type solid electrolyte is 100 nm-1 µm.

3. The lithium salt-free composite solid electrolyte membrane according to claim 1, wherein the polymer is selected from polyethylene oxide, polyvinylidene fluoride or polyvinylidene fluoride-hexafluoropropylene.

4. A preparation method for a lithium salt-free composite solid electrolyte membrane according to any one of claims 1-3, comprising:
step 1, performing wet ball milling on garnet-type solid electrolyte, and drying by vacuum rotary evaporation, to obtain micro-nanoscale garnet-type solid electrolyte;
step 2, mixing the micro-nanoscale garnet-type solid electrolyte and polymer in a solvent to obtain glue solution;
step 3, coating the glue solution and drying to obtain the lithium salt-free composite solid electrolyte membrane.

5. The preparation method for a lithium salt-free composite solid electrolyte membrane according to claim 4, wherein in step 2, a process for mixing the micro-nanoscale garnet-type solid electrolyte and the polymer is performed in an air atmosphere, and a mixing temperature is 25-80 °C, and a mixing time is 1-10 h.

6. The preparation method for a lithium salt-free composite solid electrolyte membrane according to claim 4, wherein in step 1, a rotational speed of the wet ball milling is 100-500 r/min, and a ball milling time is 1-20 h.

7. The preparation method for a lithium salt-free composite solid electrolyte membrane according to claim 4, wherein in step 1, a temperature of the vacuum rotary evaporation is 40-60°C; a rotating speed is 10-300 r/min.

8. The preparation method for a lithium salt-free composite solid electrolyte membrane according to claim 4, wherein in step 2, the solvent is selected from acetonitrile and dimethyl sulfoxide or mixture thereof.

9. The preparation method for a lithium salt-free composite solid electrolyte membrane according to claim 4, wherein in step 1, a method for preparing the garnet-type solid electrolyte comprises: mixing lithium source, lanthanum source, zirconium source and oxygen source in proportion and pressing into tablet; then calcining in a pure oxygen atmosphere of 900-1300 °C to prepare the garnet-type solid electrolyte.

10. An application of a lithium salt-free composite solid electrolyte membrane according to any one of claims 1-3 in an all-solid-state battery, wherein the lithium salt-free composite solid electrolyte membrane is used as an electrolyte membrane in the all-solid-state battery; wherein a thickness of the lithium salt-free composite solid electrolyte membrane is 10-400 µm.
